# EUROPÄISCHE PATENTANMELDUNG

(11) **EP 1 424 850 A2**
(43) Veröffentlichungstag der Anmeldung: **02.06.2004**
(21) Anmeldenummer: 03026353.7
(22) Anmeldetag: 18.11.2003
(51) Int. Cl.: H04N 3/08, G02B 26/08, G03B 17/00, G03B 37/02

(54) **Kamerasystem mit Ablenkeinrichtung zur Aufnahme unterschiedlicher Bereiche**

(30) Priorität: 27.11.2002 DE 10255194
(71) Anmelder: Valeo Schalter und Sensoren GmbH, 74321 Bietigheim-Bissingen (DE)
(72) Erfinder: Schuler, Thomas, 75446 Wiernsheim (DE); Schmid, Bernd, 74348 Lauffen (DE)
(74) Vertreter: Dreiss, Fuhlendorf, Steimle & Becker

(57) **Zusammenfassung**

Die Erfindung betrifft ein Kamerasystem mit einer optischen Empfangseinrichtung (10) zum Aufnehmen von Bildern und mit einer optischen Ablenkeinrichtung (20) zum Zuführen der Bilder zu der optischen Empfangseinrichtung. Bei traditionellen Kamerasystemen dieser Art, insbesondere wie sie in Fahrzeugen verwendet werden, sind die optischen Ablenkeinrichtungen (20) auf eine Blickrichtung und damit auf einen Beobachtungsbereich (A,B) fest eingestellt. Die Erfassung eines anderen Beobachtungsbereiches erfordert deshalb bisher jeweils immer die Verwendung eines anderen zusätzlichen Kamerasystems, inklusive einer teuren optischen Empfangseinrichtung. Um diesen Nachteil zu überkommen und um die bekannten Kamerasysteme universeller, d.h. zur Erfassung unterschiedlicher Beobachtungsbereiche einsetzbar zu machen, wird erfindungsgemäß ein Kamerasystem vorgeschlagen, dessen optische Ablenkeinrichtung (20) mindestens einen Mikrospiegel aufweist. Der Ablenkwinkel (δ) des Mikrospiegels (22) ist mit Hilfe einer Steuereinrichtung (30) variabel einstellbar, so dass der optischen Empfangseinrichtung (10) nach Maßgabe durch den jeweils eingestellten Ablenkwinkel (δ) Bilder von unterschiedlichen Beobachtungsbereichen zugeführt werden können.

## Beschreibung

Die Erfindung betrifft ein Kamerasystem mit einer optischen Empfangseinrichtung zum Aufnehmen von Bildern, insbesondere aus dem Innern oder von der Umgebung eines Fahrzeugs und mit einer optischen Ablenkeinrichtung zum Zuführen der Bilder zu der optischen Empfangseinrichtung.

Aus dem Stand der Technik sind Mikrospiegel (DMD: digital mirror device) grundsätzlich bekannt. Dabei handelt es sich um Spiegel, die jeweils eine Vielzahl matrixförmig angeordneter kleiner Spiegelelemente aufweisen, deren Ablenkwinkel mit Hilfe einer Steuereinrichtung jeweils individuell variabel einstellbar und damit veränderbar sind. Bekannte Anwendungsgebiete derartiger Mikrospiegel sind Projektionssysteme (Beamer) für die Projektion von Bilddaten, speziell bei Präsentationen.

Auch die oben einleitend erwähnten Kamerasysteme sind grundsätzlich aus dem Stand der Technik bekannt. Die bei derartigen Systemen im Bereich der Fahrzeugtechnik eingesetzten optischen Empfangseinrichtungen, d.h. Kameras, basieren üblicherweise auf CCD (charged coupled device) oder CMOS (complementary symmetry metal-oxide semiconductor) Technologie. Die der jeweiligen optischen Empfangseinrichtung zugeordnete optische Ablenkeinrichtung ist üblicherweise auf eine Blickrichtung und damit auf einen Beobachtungsbereich fest ausgerichtet; für die Erfassung unterschiedlicher Beobachtungsbereiche werden deshalb bisher jeweils separate komplette Kamerasysteme verwendet, die jeweils auch immer eine teure optische Empfangseinrichtung mit umfassen. Diese Vorgehensweise hat den Nachteil, dass sie nicht nur technisch, sondern insbesondere auch finanziell sehr aufwändig ist.

Ausgehend von diesem Stand der Technik ist es die Aufgabe der Erfindung, ein bekanntes Kamerasystem derart weiterzubilden, dass es universeller, d.h. insbesondere auch für unterschiedliche Beobachtungsbereiche, einsetzbar ist.

Diese Aufgabe wird durch den Gegenstand des Patentanspruchs 1 gelöst. Genauer gesagt erfolgt die Lösung der Aufgabe bei dem einleitend beschrieben Kamerasystem insbesondere dadurch, dass die optische Ablenkeinrichtung mindestens einen Mikrospiegel aufweist, dessen Ablenkwinkel mit Hilfe einer Steuereinrichtung variabel einstellbar ist, so dass der optischen Empfangseinrichtung nach Maßgabe durch den jeweils eingestellten Ablenkwinkel Bilder von unterschiedlichen Beobachtungsbereichen zugeführt werden können.

Insofern ist das erfindungsgemäß vorgeschlagene Kamerasystem vorteilhafterweise universell einsetzbar, ohne dass für die Aufnahme von Bildern der unterschiedlichen Beobachtungsbereiche jeweils separate optische Empfangseinrichtungen erforderlich wären. Die unterschiedlichen Beobachtungsbereiche lassen sich von einer Position oder von unterschiedlichen Positionen aus, aus jeweils unterschiedlichen Blickwinkeln beobachten.

Gemäß einem ersten Ausführungsbeispiel weist der Mikrospiegel eine Vielzahl von Spiegelelementen auf, deren Ablenkwinkel jeweils individuell mit Hilfe der Steuereinrichtung einstellbar sind. Auf diese Weise ist es möglich, dass ein Bild von einem Beobachtungsbereich nicht vollständig erfasst werden muss, sondern es können stattdessen einzelne Punkte oder Bereiche des Bildes ausgeblendet werden, indem die Ablenkwinkel der diese Bildbereiche erfassenden Spiegelelemente zumindest temporär anders eingestellt werden. Auch die Intensität des Lichtes der von dem Mikrospiegel erfassten Bilder lässt sich durch schnelles Verändern des Ablenkwinkels, d.h. durch sogenanntes Ein-/Ausschalten, beeinflussen.

Die Verwendung von mindestens zwei Mikrospiegeln in der optischen Ablenkeinrichtung bietet den Vorteil, dass diese an unterschiedlichen Orten positioniert werden können, so dass dann mit Hilfe der Mikrospiegel einer einzigen optischen Empfangseinrichtung nicht nur Bilder aus unterschiedlichen Blickwinkeln an einer Position, sondern auch Bilder von unterschiedlichen Blickwinkeln an unterschiedlichen Positionen / Orten zugeführt werden können.

Die Einstelllungen von optischen Empfangseinrichtungen und Mikrospiegel können vorteilhafterweise so synchronisiert, d.h. aufeinander abgestimmt, werden, dass sich die Bildbereiche der der optischen Empfangseinrichtung zugeführten Bilder entweder nicht oder nur in gewünschtem Maße überlappen.

Es ist von Vorteil, dass die einzelnen Spiegelelemente in einem Mikrospiegel oder dass mehrere Mikrospiegel in der optischen Einrichtung mit Hilfe der Steuereinrichtung so angesteuert werden können, dass die jeweils von ihnen erfassten Bilder der optische Empfangseinrichtung entweder zeitgleich, zeitlich verzögert oder in einer vorgegebenen Sequenz zugeführt werden können.

Eine Ausbildung der optischen Empfangseinrichtung nur in Form einer Licht-Empfangsdiode bietet den Vorteil, dass eine teure Kameraeinrichtung und damit Kosten eingespart werden können.

Schließlich ist es vorteilhaft; wenn die Steuereinrichtung oder eine separate Auswerteeinrichtung ausgebildet ist, die Daten der von der optischen Empfangseinrichtung aufgenommenen Bilder zu empfangen und im Hinblick auf ein gewünschtes Kriterium auszuwerten.

Die Erfindung wird nachfolgend unter Bezugnahme auf die beigefügten Figuren anhand von Beispielen näher beschrieben, wobei
- Fig. 1: ein erstes Ausführungsbeispiel der Erfindung; und
- Fig. 2: ein zweites Ausführungsbeispiel der Erfindung
veranschaulicht.

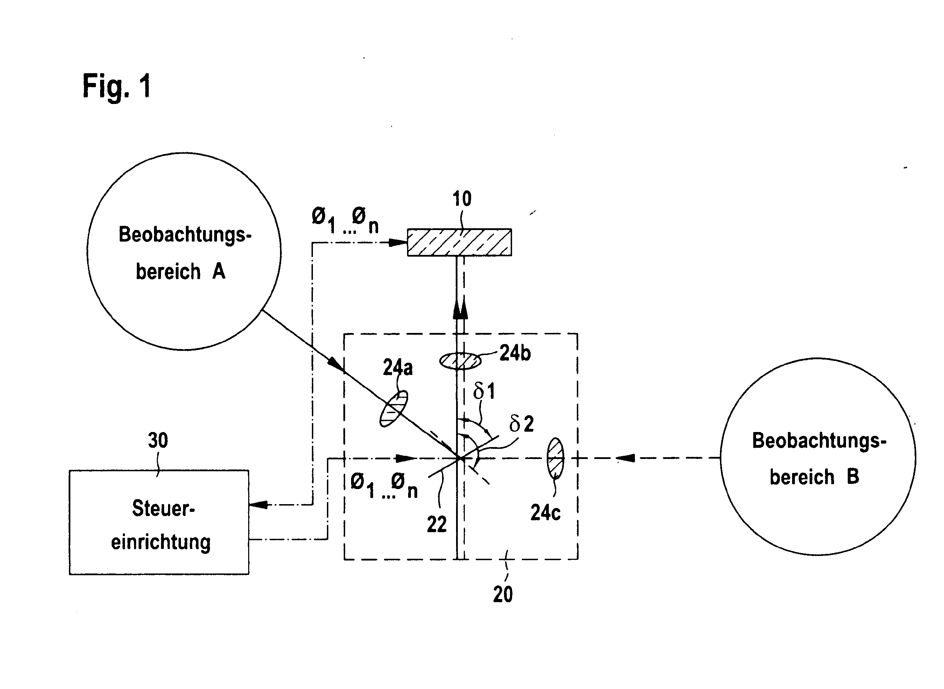

Fig. 1 zeigt ein erstes Ausführungsbeispiel der Erfindung, bei welchem das Kamerasystem eine optische Empfangseinrichtung 10 und eine optische Ablenkeinrichtung 20 aufweist. Die optische Empfangseinrichtung 10, vorzugsweise eine CCD-Kamera oder mindestens eine beliebige Licht-Empfangsdiode, dient zum Aufnehmen von Bildern, die ihr von der optischen Ablenkeinrichtung 20 zugeführt werden. Bei Verwendung mehrerer Licht-Empfangsdioden können diese jeweils ein unterschiedliches spektrales Verhalten aufweisen. Licht-Empfangsdioden bieten gegenüber Kamerachips, z. B. CCD-Kameras, den Vorteil, dass sie in nur wesentlich geringerem Umfang von Umgebungslicht abhängig sind als die Kamerachips. Für die Zuführung der Bilder an die optische Empfangseinrichtung 10 umfasst die optische Ablenkeinrichtung einen Mikrospiegel 22. Mit Hilfe einer Steuereinrichtung 30, vorzugsweise eines Mikrocontrollers mit einem Datenspeicherelement, wird der Ablenkwinkel δ1, δ2 des Mikrospiegels 22 bzw. von dessen einzelnen Spiegelelementen, jeweils individuell so eingestellt, dass der optischen Empfangseinrichtung 10 Bilder unterschiedlicher, jeweils aktuell zu beobachtender Räume, d.h. insbesondere von den Beobachtungsbereichen A und B, zugeführt werden. Dabei synchronisiert die Steuereinrichtung 30 die Aufnahmezeiten der optische Empfangseinrichtung 10 mit den Zeiten, in denen der Mikrospiegel 22 Bilder bereitstellt; dazu gibt die Steuereinrichtung 30 sowohl an den Mikrospiegel 22 wie auch an die optische Empfangseinrichtung 10 ein gleiches Taktsignal ⌀₁ ... ⌀ₙ aus. Schließlich empfängt die Steuereinrichtung 30 oder eine separate Auswerteeinrichtung (hier nicht gezeigt) neben Kameradaten auch die Daten der von der optische Empfangseinrichtung 10 aufgenommenen Bilder, um diese zu speichern und auszuwerten.

Aufgrund der erfindungsgemäßen Verwendung des Mikrospiegels 22 ist für die Beobachtung der beiden Beobachtungsbereiche A, B nur noch eine optische Empfangseinrichtung erforderlich. Gegenüber der bisher üblichen Verwendung von einer separaten optische Empfangseinrichtung für jeden Beobachtungsbereich bedeutet dies eine wesentliche Kostenersparnis.

Zur Verbesserung der Bildqualität, insbesondere der Bildschärfe der der optische Empfangseinrichtung 10 zugeführten Bilder weist die optische Ablenkeinrichtung 20 optische Linsen 24a, 24b und 24c in dem Strahlengang des auf den Mikrospiegels 22 einfallenden und/oder des von diesem reflektieren Lichtes auf.

Ein Beispiel für eine Anwendung des beschriebenen Kamerasystems mit einer optischen Ablenkeinrichtung 20, die nur einen Mikrospiegel 22 aufweist, ist ein Nachtsichtgerät. Bei solchen Geräten wird mit Hilfe einer optischen Empfangseinrichtung, die insbesondere im Infra-Rot-Licht-Bereich sehr empfindlich ist, z.B. ein Bild einer Straße bei Nacht auf ein Display abgebildet. Erscheint bei traditionellen Geräten dieser Art eine sehr helle Lichtquelle, z.B. in Form eines strahlenden Schweinwerfers eines entgegenkommenden Fahrzeugs, in dem Bild, so wird ein großer Bereich des Bildes überblendet. Das hat zur Folge, dass Details hinter oder seitlich der Lichtquelle auf dem Bild nicht mehr sichtbar sind. Durch die Verwendung der beanspruchten optischen optische Ablenkeinrichtung 20 mit dem Mikrospiegel 22 lässt sich ein einzelner Bildbereich, hier z.B. der Bereich des Bildes mit der störenden Lichtquelle, durch geeignete Einstellung des Ablenkwinkels des Mikrospiegels bzw. durch geeignete Einstellung von dessen einzelnen für den besagten Bereich relevanten Spiegelelementen vorteilhafter Weise ausblenden. Auf diese Weise wird das mögliche Einsatzspektrum des Nachtsichtgerätes gegenüber bekannten Geräten deutlich erweitert.

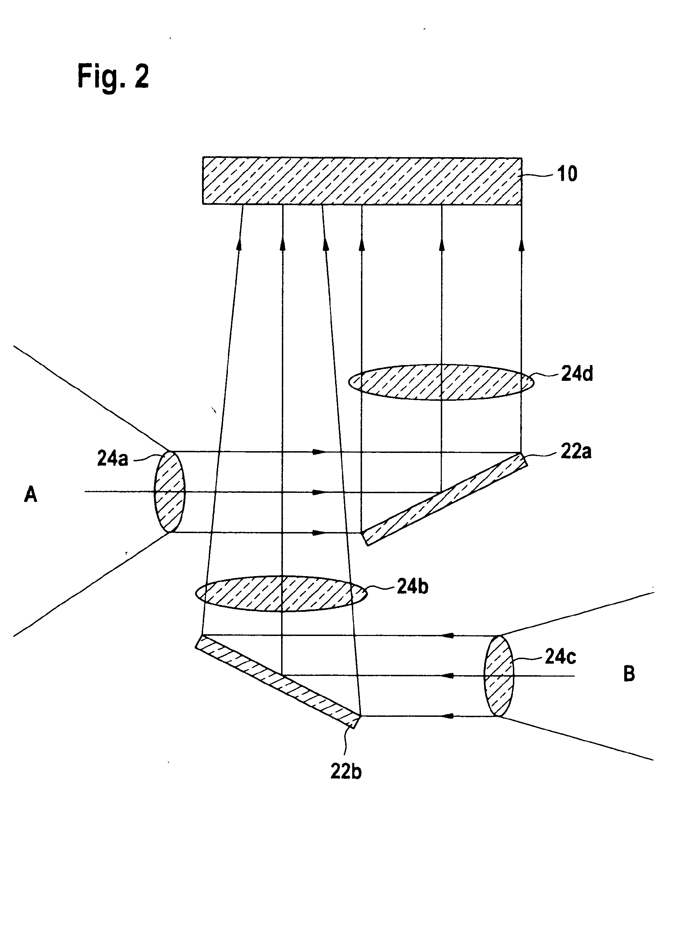

Fig. 2 zeigt ein zweites Ausführungsbeispiel der Erfindung, welches sich von dem ersten Ausführungsbeispiel gemäß Fig. 1 im wesentlichen darin unterscheidet, dass die optische Ablenkeinrichtung 20 hier nicht nur einen, sondern zwei Mikrospiegel 22a und 22b aufweist. Die auf die beiden Mikrospiegel einfallenden Lichtstrahlen mit Bildinformationen aus den unterschiedlichen Beobachtungsbereichen A und B werden über optische Linsen 24a bis 24d an die optische Empfangseinrichtung 10 weitergeleitet. Im Unterschied zu dem ersten Ausführungsbeispiel müssen die beiden Beobachtungsbereiche A und B hier nicht mehr von der Position eines einzigen Mikrospiegels aus beobachtbar sein, sondern können stattdessen an ganz unterschiedlichen Orten liegen, weil auch die beiden hier verwendeten Mikrospiegel 22a und 22b an unterschiedlichen Orten positionierbar sind. Anders ausgedrückt, auf diese Weise können auch Bereiche beobachtet werden, die von einem ortsfesten Mikrospiegel alleine, z.B. aufgrund eines dafür erforderlichen zu großen Ablenkwinkels, nicht erfasst werden könnten. Auch eine Verwendung von mehr als zwei Mikrospiegeln in der optischen Ablenkeinrichtung 20 ist möglich.

Anstelle der Linsen 24a bis 24d können sowohl in dem ersten wie auch in dem zweiten Ausführungsbeispiel komplexere Optiken zur Aufbereitung des auf die Mikrospiegel einfallenden und von diesen abgelenkten Lichtes eingesetzt werden.

Ein Beispiel für den Einsatz eines Kamerasystems mit mehreren Mikrospiegeln ist die Kontrolle und Einstellung der richtigen Position von Sitzen in Fahrzeugen mit Airbags. Für die Detektion einer aktuellen Sitzposition mit Hilfe des Prinzips der Triangulation ist es erforderlich, die Abstände des Sitzes zu verschiedenen Bezugspunkten im Fahrzeug, d.h. z.B. zum Armaturenbrett und zur rechten und linken Fahrzeugtür, zu bestimmen. Anstelle der Verwendung mehrerer örtlich getrennt positionierter Kamerasysteme mit jeweils einer eigenen optische Empfangseinrichtung für die Ermittlung der einzelnen Abstände bietet die vorliegende Erfindung die Möglichkeit, die gesuchten Abstände durch den Einsatz von preiswerten örtlich getrennt positionierten Mikrospiegeln 22a und 22b sowie mit nur einer optische Empfangseinrichtung 10 zu erfassen.

Dabei werden die Zeiten, in denen die beiden Mikrospiegel 22a, 22b die Bilder mit den örtlichen Gegebenheiten im Fahrzeug an die optische Empfangseinrichtung 10 übermitteln von der Steuereinrichtung 30 mit den Aufnahmezeiten der optische Empfangseinrichtung vorteilhafterweise so synchronisiert, d.h. abgestimmt, dass ein Empfang bzw. eine Aufnahme der Bilder in einer vorgegebenen Reihenfolge durch die optische Empfangseinrichtung möglich ist; alternativ ist auch ein zeitgleicher oder zeitlich verzögerter Empfang der Bilder möglich. Die Steuereinrichtung 30 oder eine separate Auswerteeinrichtung (hier nicht gezeigt) empfängt daraufhin die Bilder erforderlichenfalls zusammen mit anderen notwendigen Daten von der optische Empfangseinrichtung 10, speichert die Bilder, wertet sie im Hinblick auf ein vorgegebenes Abstandskriterium aus, indem sie die gesuchten realen Abstände aus den Bildern ermittelt und berechnet schließlich Korrekturgrößen, die darüber Auskunft geben, wie die reale Sitzposition verändert werden muss, um einen gefahrlosen Sitz einer Person in dem Fahrzeug auch bei Betrieb des Airbags zu ermöglichen. Die ggf. erforderliche Veränderung der Sitzposition nach Maßgabe durch die berechneten Korrekturgrößen kann entweder manuell oder automatisch erfolgen.

Weitere Anwendungsgebiete von Mikrospiegeln in den beschriebenen Kamerasystemen sind z.B. die Innenraumüberwachung von Fahrzeugen, die Detektion von Regentropfen auf der Außenseite und von Schmutz oder Beschlag auf der Innenseite von Windschutzscheiben oder die Beobachtung von Bereichen vor und hinter einem Fahrzeug beim Einparken.

## Patentansprüche

1. Ein Kamerasystem (10) umfassend:
eine optische Empfangseinrichtung (10) zum Aufnehmen von Bildern, insbesondere aus dem Innern oder von der Umgebung eines Fahrzeugs; und
eine optische Ablenkeinrichtung (20) zum Zuführen der Bilder zu der optischen Empfangseinrichtung,
**dadurch gekennzeichnet, dass** die optische Ablenkeinrichtung (20) mindestens einen Mikrospiegel (22) aufweist, dessen Ablenkwinkel (δ) mit Hilfe einer Steuereinrichtung (30) variabel einstellbar ist, so dass der optischen Empfangseinrichtung (10) nach Maßgabe durch den jeweils eingestellten Ablenkwinkel (δ) Bilder von unterschiedlichen Beobachtungsbereichen (A, B) zugeführt werden können.

2. Kamerasystem nach Anspruch 1, **dadurch gekennzeichnet, dass** der Mikrospiegel (22) eine Vielzahl von Spiegelelementen aufweist, deren Ablenkwinkel jeweils individuell mit Hilfe der Steuereinrichtung (30) einstellbar sind.

3. Kamerasystem nach einem der vorangegangenen Ansprüche, **dadurch gekennzeichnet, dass** die optische Ablenkeinrichtung (20) mindestens zwei Mikrospiegel (22a, 22b) aufweist, die jeweils in der Weise an unterschiedlichen Orten positionierbar sind, dass sie zumindest für einen Teil ihres jeweils einstellbaren Ablenkwinkelbereiches unterschiedliche Beobachtungsbereiche (A, B) erfassen.

4. Kamerasystem nach Anspruch 3, **dadurch gekennzeichnet, dass** die Steuereinrichtung (30) ausgebildet ist, den Mikrospiegel (22) und die optische Empfangseinrichtung (10) so miteinander zu synchronisieren, dass zwischen den Bildern der unterschiedlichen Beobachtungsbereiche (A, B) entweder keine Überlappung oder nur eine Überlappung in gewünschtem Ausmaß entsteht, wenn die Bilder der optischen Empfangseinrichtung (10) zugeführt werden.

5. Kamerasystem nach einem der Ansprüche 3 oder 4, **dadurch gekennzeichnet, dass** die Steuereinrichtung (30) ausgebildet ist, die Ablenkwinkel der Mikrospiegel (22a, 22b) oder die Ablenkwinkel von deren einzelnen Spiegelelementen individuell so anzusteuern, dass der optischen Empfangseinrichtung (10) die Bilder der unterschiedlichen Beobachtungsbereiche (A, B) entweder zeitgleich oder zeitlich verzögert oder in einer vorgegebenen Sequenz zugeführt werden.

6. Kamerasystem nach einem der vorgenannten Ansprüche, **dadurch gekennzeichnet, dass** die optische Empfangseinrichtung als mindestens eine Licht-Empfangsdiode ausgebildet ist.

7. Kamerasystem nach einem der vorangegangenen Ansprüche, **dadurch gekennzeichnet, dass** die Steuereinrichtung (30) oder eine separate Auswerteeinrichtung ausgebildet ist, die Daten der von der optische Empfangseinrichtung (10) aufgenommenen Bilder zu empfangen und im Hinblick auf ein gewünschtes Kriterium auszuwerten.
